(19) Europäisches Patentamt
European Patent Office
Office européen des brevets

(11) **EP 2 770 474 A1**

(12) **EUROPEAN PATENT APPLICATION**

(43) Date of publication:
**27.08.2014 Bulletin 2014/35**

(51) Int Cl.:
***G06Q 40/02*** *(2012.01)*

(21) Application number: **14155960.9**

(22) Date of filing: **20.02.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **22.02.2013  US 201313774873**

(71) Applicant: **Palo Alto Research Center Incorporated**
**Palo Alto, California 94304 (US)**

(72) Inventors:
• **Zhang, Yin**
  **Cupertino, CA 95014 (US)**
• **Liu, Juan**
  **Cupertino, CA 95014 (US)**
• **Eldardiry, Hoda**
  **San Carlos, CA 94070 (US)**

(74) Representative: **Lord, Michael**
  **Gill Jennings & Every LLP**
  **The Broadgate Tower**
  **20 Primrose Street**
  **London EC2A 2ES (GB)**

(54) **A method and apparatus for combining multi-dimensional fraud measurements for anomaly detection**

(57)    A fraud-detection system facilitates detecting fraudulent entities by computing weighted fraud-detecting scores for the individual entities. During operation, the system can obtain fraud warnings for a plurality of entities, and for a plurality of fraud types. The system computes, for a respective entity, a fraud-detection score which indicates a normalized cost of fraudulent transactions from the respective entity. The system then determines, from the plurality of entities, one or more anomalous entities whose fraud-detection score indicates anomalous behavior. The system can determine an entity that is likely to be fraudulent by comparing the entity's fraud-detection score to fraud-detection scores for other entities.

FIG. 3

## Description

### Field

This disclosure is generally related to fraud detection. More specifically, this disclosure is related to generating fraud-detection score that is weighed based on an inverse frequency for the fraud type.

### Related Art

Governing organizations routinely audit certain entities, such as people or companies, to ensure that these entities are following the organization's policies, and thus are not committing fraudulent acts. The policies are typically written as documents that specify rules which need to be enforced by agents of the governing organization. The Internal Revenue Service (IRS), for example, employs agents to audit the tax filings from tax payers and companies to ensure that these tax payers have not omitted revenue from their tax filings, either intentionally or accidentally.

As a further example, pharmacies typically dispense controlled drugs, such as narcotics, which can only be handled by licensed pharmacists and doctors, and should only be made available to patients with a proper prescription. The pharmacy or the drug enforcement agency (DEA) may routinely audit how the controlled drugs are being dispensed to ensure that pharmacists are not committing fraud by dispensing controlled drugs in an illegal manner. Also, a health-insurance agency may audit the insurance claims filed by a pharmacy to ensure that the pharmacy is not committing fraud, for example, by dispensing or refilling drugs for which a patient has not submitted a prescription.

However, to detect fraudulent entities, an organization typically has to audit these entities individually, which can be a time-consuming and resource-consuming effort. The organization may instead opt for auditing a randomly selected batch of entities at a time, and/or may audit entities that are suspected of having committed fraud in some way.

## SUMMARY

One embodiment provides a fraud-detection system that facilitates detecting fraudulent entities. During operation, the system can obtain fraud warnings for a plurality of entities, and for a plurality of fraud types. The system computes, for a respective entity, a fraud-detection score which indicates a normalized cost of fraudulent transactions from the respective entity. The system then determines, from the plurality of entities, one or more anomalous entities whose fraud-detection score indicates anomalous behavior. The system can determine an entity that is likely to be fraudulent by comparing the entity's fraud-detection score to fraud-detection scores for other entities.

In some embodiments, an entity can include one or more of: a pharmacy; a health clinic; a pharmacy patient; a merchant; and a credit card holder.

In some embodiments, a cost of the fraudulent transactions for a fraud type $a$ can indicate a number of transactions associated with fraud type $a$, or an aggregate price for the transactions associated with fraud type $a$.

In some embodiments, the system processes transactions associated with the respective entity, using a set of fraud-detecting rules, and generates a set of fraud-warning for the respective entity based on the fraud-detecting rules. A respective fraud warning indicates a transaction which may be associated with a fraud type for a corresponding fraud-detecting rule.

In some embodiments, while computing a fraud-detection score for the respective entity, the system computes a fraud weight, $fraud\_weight(a)$, for the respective fraud type $a$. The system also computes a weighted fraud cost, $wfc(a,p)$, for the respective entity $p$ and fraud type $a$:

$$wfc(a,p)=N(a,p)*fraud\_weight(a)$$

wherein $N(a,p)$ indicates an aggregate cost for transactions from entity $p$ that are associated with fraud type $a$. The system then computes a fraud-detection score for the respective entity $p$ by aggregating weighted fraud costs for the plurality of fraud types.

In some embodiments, while computing the fraud weight for the respective fraud type, the system computes:

$$fraud\_weight(a) = \log\frac{T}{T(a)}.$$

Here, T indicates a total number of entities, $a$ indicates the fraud type, and $T(a)$ indicates a total number of entities that have at least a predetermined number of associated with fraud type *a*.

In some embodiments, while computing the fraud-detection score for entity *p* involves, the system computes:

$$S(p) = \sum_{a \in A} wfc(a, p).$$

Here, A indicates the plurality of fraud types.

In some variations, while computing the fraud-detection score for the respective entity *p*, the system computes:

$$S(p) = \frac{N(a,p)}{T(a)}.$$

Here, $N(a,p)$ indicates an aggregate cost for transactions that are associated with fraud type *a* from entity *p*, and *T* indicates an aggregate cost for all transactions from all entities.

In some variations, while computing the fraud-detection score for the respective entity *p*, the system computes:

$$S(p) = \frac{N(a,p)}{log(T(a))}.$$

Here, $N(a,p)$ indicates an aggregate cost for transactions that are associated with fraud type *a* from entity *p*, and *T* indicates an aggregate cost for all transactions from all entities.

In some embodiments, while computing the fraud-detection score for the respective entity *p*, the system computes:

$$S(p) = N(A, p) - r(a) * T(p).$$

Here, $N(A,p)$ indicates an aggregate cost for transactions that are associated with any fraud in set A from entity *p*, $r(a)$ indicates an average violation rate for fraud type *a*, and $T(p)$ indicates an aggregate cost for all transactions from entity *p*.

**BRIEF DESCRIPTION OF THE FIGURES**

FIG. 1 illustrates an exemplary computer system that facilitates detecting a fraudulent entity in accordance with an embodiment.

FIG. 2 illustrates a method for identifying entities that are likely to be committing fraud in accordance with an embodiment.

FIG. 3 illustrates a method for analyzing fraud warnings to identify fraudulent entities in accordance with an embodiment.

FIG. 4 illustrates a method for computing a fraud-detection score for an entity under investigation in accordance with an embodiment.

FIG. 5 illustrates a histogram of fraud-detection scores for a plurality of entities under investigation in accordance with an embodiment.

FIG. 6 illustrates an exemplary apparatus that facilitates detecting fraudulent entities in accordance with an embodiment.

FIG. 7 illustrates an exemplary computer system that facilitates detecting fraudulent entities in accordance with an embodiment.

In the figures, like reference numerals refer to the same figure elements.

**Overview**

Embodiments of the present invention provide a fraud detection system that solves the problem of processing fraud warnings for a plurality of entities to determine which entities are likely to be committing fraudulent transactions. For example, an organization such as a medical-insurance agency can generate rules for detecting possibly fraudulent activity. The system can process transactions, such as insurance claims from pharmacies, using these fraud-detecting rules to generate a fraud warning for a transaction that violates a rule.

However, not all fraud warnings indicate that a fraudulent transaction has occurred, or that an entity is intentionally fraudulent. In some embodiments, the system analyzes the set of fraud warnings to detect an anomaly in the fraud warnings. For example, the medical-insurance agency may have a policy that restricts pharmacies from performing early refills. The system thus generates a fraud warning related to early refills whenever the system detects that a pharmacy has performed such an early refill for a patient prior to receiving the prescription from the patient.

Some pharmacies may perform an early refill from time to time, for example, to accommodate a request from a patient. Other pharmacies may routinely perform early refills to file more insurance claims, which is against the insurance agency's policies. The system can distinguish fraudulent entities from others that violated a rule unintentionally by determining whether the type of fraud warning is uncommon across a population of entities, and whether the number or cost of the fraud violations from a given entity are greater than that of other entities. A fraudulent pharmacy that routinely commits fraudulent transactions may incur a high "cost" associated with a given fraud type, such that this type of fraudulent transaction may have a low frequency across many pharmacies (e.g., the transaction is not a common transaction).

### Fraud-Detecting System

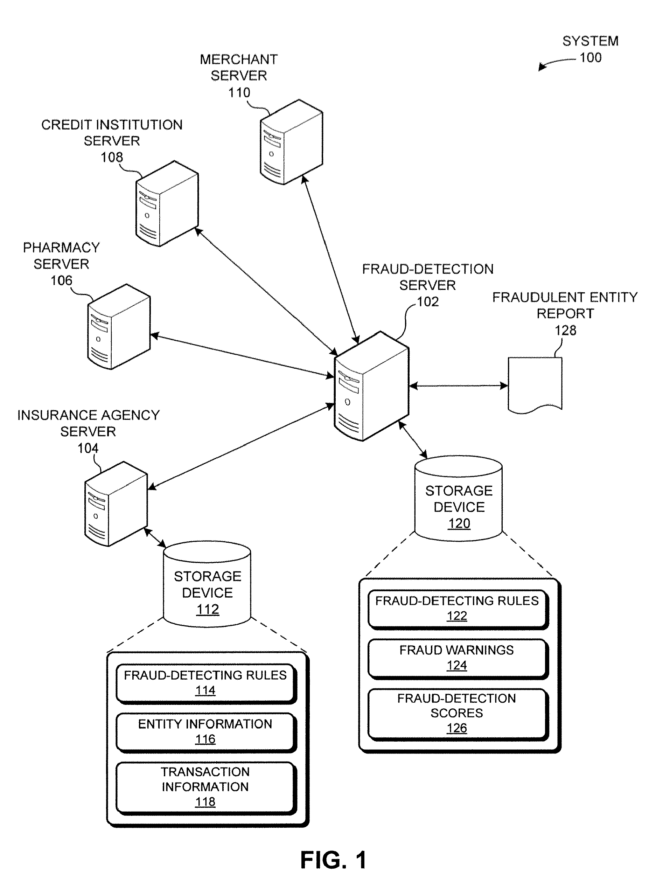

FIG. 1 illustrates an exemplary computer system 100 that facilitates detecting a fraudulent entity in accordance with an embodiment. Computer system 100 can include a fraud-detection server 102 that generates a fraudulent entity report 128 for an organization, such as for an insurance agency, a pharmacy, a credit institution, or a merchant. For example, an insurance agency server 104 can include or be coupled to a storage device 112, which stores fraud-detection rules 114, entity information 116, and transaction information 118. Entity information 116 can include profiles for a set of entities, and transaction information 118 can include a set of recent and/or historical transactions from the entities under investigation.

Fraud-detection server 102 can include a storage device 120, which stores fraud-detecting rules 122, fraud warnings 122, and fraud-detection scores 124. During operation, fraud-detection server 102 can receive fraud-detection rules 114 from Insurance agency server 104, which configures fraud-detection server 102 to generate fraudulent entity report 126 for the insurance agency. Fraud-detection server 102 can also periodically receive entity information 116 and transaction information 118 from insurance agency server 104. Fraud-detection server 102 can process this information using fraud-detection rules 122 to generate fraud warnings 124, and to compute fraud-detection scores for the entities under investigation. Fraud-detection server 102 can also analyze fraud-detection scores 126 to generate fraudulent entity report 128, which can indicate a set of identify entities that are likely to have committed fraud.

In some embodiments, fraud-detection server 102 can receive fraud warnings 124 from the organization's computer system (e.g., from insurance agency server 104), which fraud-detection server 102 can use to generate fraud-detection scores 126 and fraudulent entity report 128 without having to process sensitive information from the entities under investigation.

Fraud-detecting rules 122 and fraud warnings 124 can correspond to a variety of possible fraud types. For example, some of fraud-detecting rules 122 generate fraud warnings based on DEA violations against pharmacies under investigation. A fraud-detecting rule can include a condition for generating a fraud warning when a pharmacy has received at least a threshold number of warnings or violations from the DEA. Another fraud-detecting rule can include a condition for generating a fraud warning for a pharmacy when a total amount of money owed and/or paid to the DEA in fines against this pharmacy is greater than a threshold fine amount.

As a further example, some of fraud-detecting rules 122 generate fraud warnings based on a pharmacy's transactions that violate certain operating procedures and/or policies (e.g., policies or procedures instituted by the DEA, an insurance agency, and/or the pharmacy's corporate organization), such as by performing an early fill or refill, regardless of whether these transactions have resulted in a DEA violation. a pharmacy is said to have performed an "early fill" when the pharmacy re-fills a prescription prior to the patient consuming at least a percentage of an earlier fill. In many cases, a pharmacy may be performing an early fill during slow work hours to lessen the number of prescriptions that may need to be filled in the near future, or to accommodate a patient that may not be able to pick-up the refill in the near future (e.g., due to travel arrangements).

This practice is not ideal, however, because it results in patients getting access to additional controlled substances that they may not use or they may abuse, and because it results in additional costs the medical-insurance agency. Hence, some of the fraud-detecting rules may include a condition for generating a fraud warning based on a number or cost of early fills performed by a pharmacy. For example, a fraud-detecting rule may define that an "early fill" has occurred when a pharmacy fills a prescription before a predetermined percentage of the previous fill is consumed (e.g., before the patient consumes at least 75% of the previous fill). The fraud-detecting rule may generate a fraud warning when a pharmacy has completed at least a threshold number of transactions associated with an early fill, based on a total amount of money associated with the early-fill transactions, or based on a total amount of money associated with the un-used portion of the previous fill (e.g., as determined based on a per-pill cost).

The fraud-detecting rule may also generate fraud warnings based on other metrics for detecting early refills. For example, an organization's server (e.g., server 104) or fraud-detection server 102 may keep track of a patient's number of unused medication (e.g., a number of pills) when a pharmacy performs a refill transaction, and computes an overall "unused-medication ratio" that indicates an aggregate percentage of unused medication associated with the pharmacy's refill transactions. A pharmacy that typically refills prescriptions two days before a patient's prior fill runs out may incur an unused-medication ratio of approximately 6.7%. On the other hand, a pharmacy that typically refills prescriptions one week early may incur an unused-medication ratio of approximately 75%. Hence, a fraud-detecting rule may generate a fraud warning when a pharmacy's overall "unused ratio" reaches a predetermined threshold level (e.g., 75%).

In some embodiments, fraud-detection server 102 can generate fraudulent entity report 126 for a pharmacy by receiving, from a pharmacy server 106, fraud-detection rules and transaction information (e.g., prescription claims) related to patients that are under investigation. Fraudulent entity report 126 can identify doctors, patients, and/or pharmacists that may be committing fraud, for example, to get illegitimate access to controlled drugs.

Fraud-detection server 102 can generate fraudulent entity report 126 for a credit institution by receiving, from a credit institution server 108, fraud-detection rules and transaction information (e.g., loan transactions and/or credit-card purchases) related to customers that are under investigation. Fraudulent entity report 126 can identify customers that are committing credit fraud, or to identify legitimate accounts that may have become compromised.

Further, fraud-detection server 102 can generate fraudulent entity report 126 for a merchant by receiving, from a merchant server 110, fraud-detection rules and transaction information (e.g., purchase, returns, and/or exchange transactions) related to customers that are under investigation. Fraudulent entity report 126 can identify customers that may be abusing the merchant's returns policy.

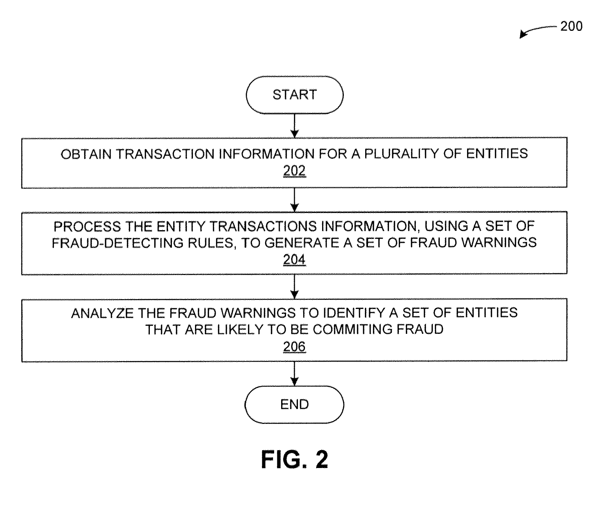

FIG. 2 illustrates a method 200 for identifying entities that are likely to be committing fraud in accordance with an embodiment. During operation, the system obtains transaction information for a plurality of entities (operation 202), and processes the entity transaction information using fraud-detecting rules to generate a set of fraud warnings (operation 204). The system can obtain the transaction information from an organization that desires to expose any entities committing fraud. For example, a medical-insurance agency may provide the system with scripts and/or transaction information for the hospitals, pharmacies, or patients with which it does business. Other organizations, such as a credit institution, a merchant, or a pharmacy, can also use the system to detect fraudulent transactions by their employees or repeat customers.

In some embodiments, the system can also receive a set of fraud warnings from the third-party organization desiring to expose fraudulent entities. The third-party organization may identify the fraud warnings in-house, and may generate fraud warnings that do not reveal personal information about the individual entities being investigated. For example, the third-party organization can generate a different unique entity identifier to identify each entity, associates a fraud warning to an entity using the entity's unique identifier.

Recall that not all fraud warnings indicate actual fraudulent behavior. In some embodiments, a fraud warning may indicate that a certain entity has performed a transaction in a way that violates the organization's preferred procedures, or using a procedure that has been previously exploited by others to commit fraud. Once the system has obtained fraud warnings for the suspicious transactions, the system analyzes the fraud warnings to identify a set of entities that are likely to be committing fraud (operation 206).

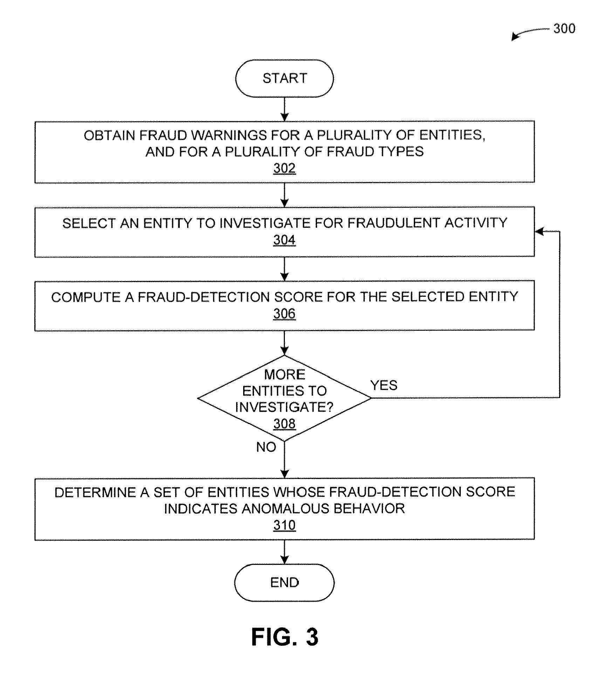

FIG. 3 illustrates a method 300 for analyzing fraud warnings to identify fraudulent entities in accordance with an embodiment. During operation, the system obtains fraud warnings for a plurality of entities, and for a plurality of fraud types (operation 302). The system then computes fraud-detection scores for a plurality of entities. For example, the system can select an entity to investigate for fraudulent activity (operation 304), and computes a fraud-detection score for the selected activity (operation 306). The system then determines if there are more entities to investigate (operation 308). If so, the system returns to operation 304 to select another entity.

Otherwise, if there are no more entities to investigate, the system analyzes the plurality of fraud-detection scores to determine a set of entities whose fraud-detection score indicates anomalous behavior (operation 310). In some embodiments, a high-fraud-detection score for a certain entity indicates that a pattern of fraud warnings associated with this entity does not follow a typical pattern of fraud warnings for other typical entities.

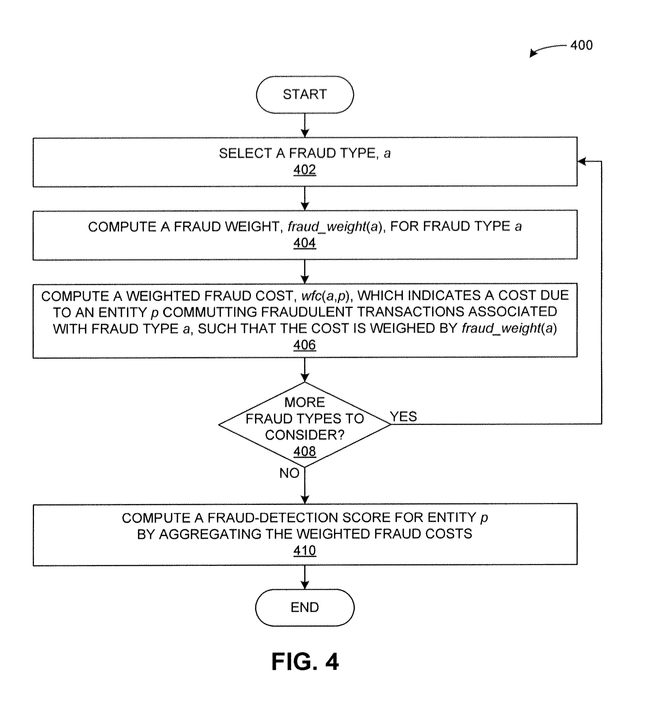

FIG. 4 illustrates a method 400 for computing a fraud-detection score for an entity under investigation in accordance with an embodiment. During operation, the system selects a fraud type, $a$ (operation 402), and computes a fraud weight for the fraud type $a$, indicated as $fraud\_weight(a)$ (operation 404). In some embodiments, the system computes the fraud weight using:

$$fraud\_weight(a) = \log\frac{T}{T(a)} \qquad (1)$$

In equation (1), $T$ indicates a total number of entities, $a$ indicates the fraud type, and $T(a)$ indicates a total number of entities that have at least a predetermined number of associated with fraud type $a$.

The system then computes a weighted fraud cost, $wfc(a,p)$ (operation 406). The weighted fraud cost indicates a cost due to an entity $p$ committing fraudulent transactions associated with fraud type $a$, such that the cost is weighted by $fraud\_weight(a)$. In some embodiments, the system computes the weighted fraud cost using:

$$wfc(a,p) = N(a,p) * fraud\_weight(a) \qquad (2)$$

In equation (2), $N(a,p)$ indicates an aggregate cost for transactions from entity $p$ that are associated with fraud type $a$.

The system then determines whether there are more fraud types to consider for entity $p$ (operation 408). If so, the system returns to operation 402 to select another fraud type. Otherwise, the system proceeds to compute a fraud-detection score for the respective entity $p$ by aggregating weighted fraud costs for the plurality of fraud types (operation 410). For example, the system can aggregate the weighted fraud costs using:

$$S(p) = \sum_{a \in A} wfc(a,p) \qquad (3)$$

In equation (3), A indicates a plurality of fraud types. The system processes equation (3) to compute the fraud-detection score for entity $p$ by adding the weighted fraud costs for entity $p$.

In other words, the system computes the fraud-detection score by computing:

$$S(p) = \sum_{a \in A} N(a_i,p) * \log\frac{T}{T(a_i)} \qquad (4)$$

Equation (4) shows how the cost for each fraud type $a_i$ is weighted by the inverse frequency of its fraud warnings across an entity population $T$ (e.g., an indication of how infrequent the fraud warning is across $T$). For example, $T(a_i)$ may indicate a number of entities that have received at least one fraud warning of type $a_i$. However, if a large percentage of entities have received such a fraud warning (e.g., $T(a_i)/T > 0.75$), then fraud type $a_i$ receives a small weight (e.g., weight = log(1.33)=0.12), making fraud type $a_i$ less significant than other fraud types that occur less frequently. For example, a fraud type detected from approximately 2% of entities (e.g., $T(a_i)/T > 0.02$) receives a relatively large weight (e.g., weight = log(50)=1.70).

Hence, entity $p$ can receive a larger weighted fraud cost $wfc(a_i,p)$, for a fraud type $a_i$, than other entities when: i) fraud type $a_i$ occurs infrequently across entity population $T$; and/or ii) entity $p$ is associated with a fraud count $N(a_i,p)$ that is significantly larger than other entities in population $T$.

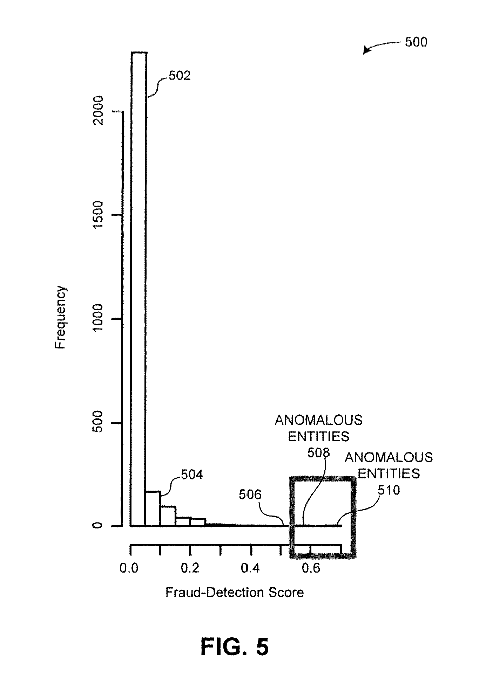

FIG. 5 illustrates a histogram 500 indicating a distribution of fraud-detection scores for a plurality of entities under investigation in accordance with an embodiment. Histogram 500 includes a set of adjacent rectangular bars (e.g., bar 502) that indicate a score frequency for various discreet score intervals (e.g., a number of entities associated with a certain score interval). The horizontal axis of histogram 500 indicates various discreet score intervals for the plurality of entities, and the vertical axis indicates a score frequency for the fraud-detection scores. For example, bar 502 indicates that approximately 2300 entities have a fraud-detection score within the interval [0, 0.05], and bar 504 indicates that approximately 200 entities have a fraud-detection core within the interval [0.05, 0.1]. Specifically, histogram 500 illustrates a decay in the score frequency within the score interval [0, 0.55] (e.g., an exponential decay), such that bar 506 indicates that 0 entities have a fraud-detection score within the interval [0.45, 0.55].

In some embodiments, the system can analyze histogram 500 to identify entities whose fraud-detection scores do not fit within a trend of histogram 500. For example, the score interval [0, 0.55] follows a normal decay pattern, and is associated with a set of "normal" entities that may not be engaged in fraudulent transactions. However, bars 508 and 510 indicate that a small number of entities have an anomalous fraud-detection score within the intervals [0.55, 0.6] and [0.65, 0.7], respectively, which does not fit within the normal decay pattern of histogram 500. The system can label these entities within the interval [0.55, 0.7] as "anomalous," which allows an organization to investigate these entities further to determine whether they are committing fraudulent transactions intentionally.

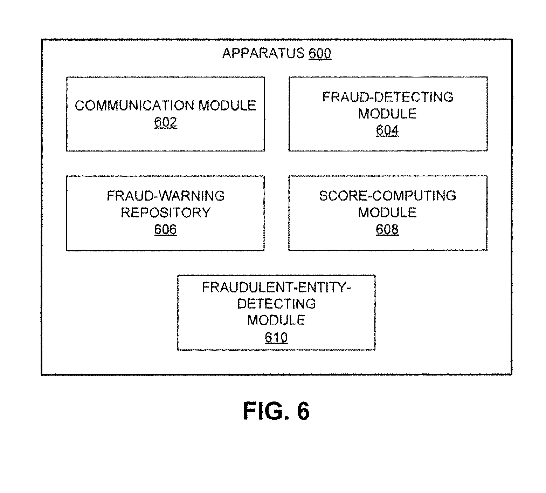

FIG. 6 illustrates an exemplary apparatus 600 that facilitates detecting fraudulent entities in accordance with an embodiment. Apparatus 600 can comprise a plurality of modules which may communicate with one another via a wired or wireless communication channel. Apparatus 600 may be realized using one or more integrated circuits, and may include fewer or more modules than those shown in FIG. 6. Further, apparatus 600 may be integrated in a computer system, or realized as a separate device which is capable of communicating with other computer systems and/or devices. Specifically, apparatus 600 can comprise a communication module 602, a fraud-detecting module 604, a fraud-warning repository 606, a score-computing module 608, and a fraudulent-entity-detecting module 610.

In some embodiments, communication module 602 can communicate with an organization's computer system to obtain entity information, transaction information, or any other information that facilitates detecting fraud (e.g., fraud warnings regarding to a plurality of entities). Fraud-detecting module 604 can process transactions associated with one or more entities, and generates a set of fraud-warning based on the fraud-detecting rules. Fraud-warning repository 606 can obtain and/or store fraud warnings for a plurality of entities, and for a plurality of fraud types. A fraud warning indicates a transaction performed by a certain entity, such that the transaction may be associated with a fraud type for a corresponding fraud-detecting rule.

Score-computing module 608 can compute, for a respective entity, a fraud-detection score which indicates a normalized cost of fraudulent transactions from the respective entity. Fraudulent-entity-detecting module 610 can determine, from the plurality of entities, one or more entities whose fraud-detection score indicates anomalous behavior.

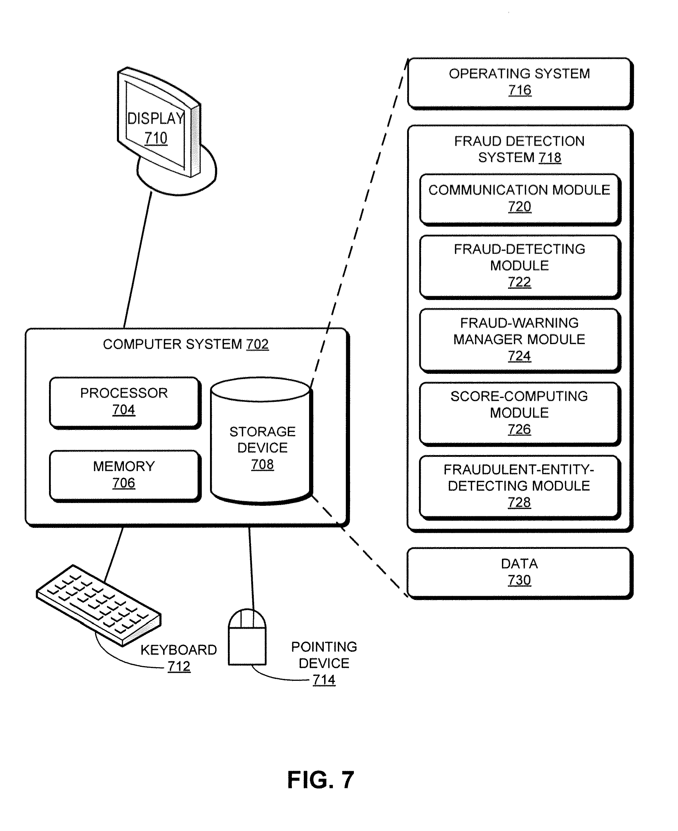

FIG. 7 illustrates an exemplary computer system 702 that facilitates detecting fraudulent entities in accordance with an embodiment. Computer system 702 includes a processor 704, a memory 706, and a storage device 708. Memory 706 can include a volatile memory (e.g., RAM) that serves as a managed memory, and can be used to store one or more memory pools. Furthermore, computer system 702 can be coupled to a display device 710, a keyboard 712, and a pointing device 714. Storage device 708 can store operating system 716, fraud detection system 718, and data 726.

Fraud detection system 718 can include instructions, which when executed by computer system 702, can cause computer system 702 to perform methods and/or processes described in this disclosure. Specifically, fraud detection system 718 may include instructions for communicating with an organization's computer system to obtain entity information, transaction information, or any other information that facilitates detecting fraud (communication module 720). Further, fraud detection system 718 can include instructions for processing transactions associated with one or more entities, and generates a set of fraud-warning based on the fraud-detecting rules (fraud-detecting module 722). Fraud detection system 718 can also include instructions for obtaining and/or storing fraud warnings for a plurality of entities, and for a plurality of fraud types (fraud-warning-manager module 724).

Fraud detection system 718 can include instructions for computing, for a respective entity, a fraud-detection score which indicates a normalized cost of fraudulent transactions from the respective entity (score-computing module 726). Fraud detection system 718 can also include instructions for determining, from the plurality of entities, one or more entities whose fraud-detection score indicates anomalous behavior (fraudulent-entity-detecting module 728).

Data 726 can include any data that is required as input or that is generated as output by the methods and/or processes described in this disclosure. Specifically, data 726 can store at least entity information, transaction information, a fraud-detecting rule, a fraud warning, a fraud-detection score, and/or a fraudulent entity report.

The data structures and code described in this detailed description are typically stored on a computer-readable storage medium, which may be any device or medium that can store code and/or data for use by a computer system. The computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing computer-readable media now known or later developed.

The methods and processes described in the detailed description section can be embodied as code and/or data, which can be stored in a computer-readable storage medium as described above. When a computer system reads and executes the code and/or data stored on the computer-readable storage medium, the computer system performs the methods and processes embodied as data structures and code and stored within the computer-readable storage medium.

Furthermore, the methods and processes described above can be included in hardware modules. For example, the hardware modules can include, but are not limited to, application-specific integrated circuit (ASIC) chips, field-programmable gate arrays (FPGAs), and other programmable-logic devices now known or later developed. When the hardware modules are activated, the hardware modules perform the methods and processes included within the hardware modules.

The foregoing descriptions of embodiments of the present invention have been presented for purposes of illustration and description only. They are not intended to be exhaustive or to limit the present invention to the forms disclosed. Accordingly, many modifications and variations will be apparent to practitioners skilled in the art. Additionally, the above disclosure is not intended to limit the present invention. The scope of the present invention is defined by the appended claims.

**Claims**

1.  A computer-implemented method for detecting fraudulent entities, comprising:

    obtaining fraud warnings for a plurality of entities, and for a plurality of fraud types;
    computing, for a respective entity, a fraud-detection score which indicates a normalized cost of fraudulent transactions from the respective entity; and
    determining, from the plurality of entities, one or more anomalous entities whose fraud-detection score indicates anomalous behavior, wherein determining an anomalous entity involves comparing the entity's fraud-detection score to fraud-detection scores for other entities.

2.  The method of claim 1, wherein a cost of the fraudulent transactions for a fraud type $a$ indicates at least one of:

    a number of transactions associated with fraud type $a$; and
    an aggregate price for the transactions associated with fraud type $a$.

3.  The method of claim 1 or claim 2, further comprising:

    processing transactions associated with the respective entity, using a set of fraud-detecting rules; and
    generating a set of fraud-warning for the respective entity based on the fraud-detecting rules, wherein a respective fraud warning indicates a transaction which may be associated with a fraud type for a corresponding fraud-detecting rule.

4.  The method of any of the preceding claims, wherein computing a fraud-detection score for the respective entity involves:

    computing a fraud weight, $fraud\_weight(a)$, for the respective fraud type $a$;
    computing a weighted fraud cost, $wfc(a,p)$, for the respective entity $p$ and fraud type $a$:

    $$wfc(a,p)=N(a,p)*fraud\_weight(a),$$

    wherein $N(a,p)$ indicates an aggregate cost for transactions from entity $p$ that are associated with fraud type $a$; and
    computing a fraud-detection score for the respective entity $p$ by aggregating weighted fraud costs for the plurality of fraud types.

5.  The method of claim 4, wherein computing the fraud weight for the respective fraud type involves computing:

    $$fraud\_weight(a) = \log\frac{T}{T(a)},$$

    wherein T indicates a total number of entities, wherein $a$ indicates the fraud type, and wherein $T(a)$ indicates a total number of entities that have at least a predetermined number of transactions associated with fraud type $a$.

6.  The method of claim 4 or claim 5, wherein computing the fraud-detection score for entity $p$ involves computing:

    $$S(p) = \sum_{a\in A} wfc(a,p),$$

    wherein $A$ indicates the plurality of fraud types.

7.  The method of any of the preceding claims, wherein computing the fraud-detection score for the respective entity $p$ involves computing:

$$S(p) = \frac{N(a,p)}{T(a)},$$

wherein $N(a,p)$ indicates an aggregate cost for transactions that are associated with fraud type $a$ from entity $p$, and $T$ indicates an aggregate cost for all transactions from all entities.

8. The method of any of the preceding claims, wherein computing the fraud-detection score for the respective entity $p$ involves computing:

$$S(p) = \frac{N(a,p)}{log(T(a))},$$

wherein $N(a,p)$ indicates an aggregate cost for transactions that are associated with fraud type $a$ from entity $p$, and $T$ indicates an aggregate cost for all transactions from all entities.

9. The method of any of the preceding claims, wherein computing the fraud-detection score for the respective entity $p$ involves computing:

$$S(p) = N(A,p) - r(a)*T(p),$$

wherein $N(A,p)$ indicates an aggregate cost for transactions that are associated with any fraud in set $A$ from entity $p$, $r(a)$ indicates an average violation rate for fraud type $a$, and $T(p)$ indicates an aggregate cost for all transactions from entity $p$.

10. A non-transitory computer-readable storage medium storing instructions that when executed by a computer cause the computer to perform a method for detecting fraudulent entities according to any of the preceding claims.

11. An apparatus to detect fraudulent entities, comprising:

a fraud-warning module to obtain fraud warnings for a plurality of entities, and for a plurality of fraud types;
a score-computing module to compute, for a respective entity, a fraud-detection score which indicates a normalized cost of fraudulent transactions from the respective entity; and
a fraudulent-entity-detecting module to determine, from the plurality of entities, one or more anomalous entities whose fraud-detection score indicates anomalous behavior, wherein determining an anomalous entity involves comparing the entity's fraud-detection score to fraud-detection scores for other entities.

12. The apparatus of claim 11, wherein an entity includes one or more of:

a pharmacy;
a health clinic;
a pharmacy patient;
a merchant; and
a credit card holder.

13. The apparatus of claim 12, further comprising a fraud-detecting module to:

process transactions associated with the respective entity, using a set of fraud-detecting rules; and
generate a set of fraud-warning for the respective entity based on the fraud-detecting rules, wherein a respective fraud warning indicates a transaction which may be associated with a fraud type for a corresponding fraud-detecting rule.

14. The apparatus of claim 12 or claim 13, wherein while computing a fraud-detection score for the respective entity, the score-computing module is further configured to:

compute a fraud weight, *fraud_weight*(*a*), for the respective fraud type *a*;
compute a weighted fraud cost, *wfc*(*a,p*), for the respective entity *p* and fraud type *a:*

$$wfc(a,p)=N(a,p)*fraud\_weight(a)$$

wherein *N*(*a,p*) indicates an aggregate cost for transactions from entity *p* that are associated with fraud type *a*; and
compute a fraud-detection score for the respective entity *p* by aggregating weighted fraud costs for the plurality of fraud types;
and optionally further configured to compute:

$$fraud\_weight(a) = \log \frac{T}{T(a)},$$

wherein *T* indicates a total number of entities, wherein *a* indicates the fraud type, and wherein *T*(*a*) indicates a total number of entities that have at least a predetermined number of transactions associated with fraud type *a*.

**15.** The apparatus of claim 14, wherein while computing the fraud-detection score for entity *p*, the score-computing module is further configured to compute:

$$S(p) = \sum_{a \in A} wfc(a,p),$$

wherein *A* indicates the plurality of fraud types.

SYSTEM
100

MERCHANT
SERVER
110

CREDIT INSTITUTION
SERVER
108

PHARMACY
SERVER
106

FRAUD-DETECTION
SERVER
102

FRAUDULENT ENTITY
REPORT
128

INSURANCE AGENCY
SERVER
104

STORAGE
DEVICE
120

STORAGE
DEVICE
112

FRAUD-DETECTING RULES
122

FRAUD WARNINGS
124

FRAUD-DETECTION
SCORES
126

FRAUD-DETECTING RULES
114

ENTITY INFORMATION
116

TRANSACTION
INFORMATION
118

**FIG. 1**

200

START

OBTAIN TRANSACTION INFORMATION FOR A PLURALITY OF ENTITIES
202

PROCESS THE ENTITY TRANSACTIONS INFORMATION, USING A SET OF
FRAUD-DETECTING RULES, TO GENERATE A SET OF FRAUD WARNINGS
204

ANALYZE THE FRAUD WARNINGS TO IDENTIFY A SET OF ENTITIES
THAT ARE LIKELY TO BE COMMITING FRAUD
206

END

## FIG. 2

300

```
                    ┌─────────┐
                    │  START  │
                    └────┬────┘
                         ▼
┌─────────────────────────────────────────────────┐
│  OBTAIN FRAUD WARNINGS FOR A PLURALITY OF         │
│  ENTITIES, AND FOR A PLURALITY OF FRAUD TYPES     │
│                      302                          │
└─────────────────────┬─────────────────────────────┘
                      ▼
┌─────────────────────────────────────────────────┐
│  SELECT AN ENTITY TO INVESTIGATE FOR              │◄──┐
│  FRAUDULENT ACTIVITY                              │   │
│                      304                          │   │
└─────────────────────┬─────────────────────────────┘   │
                      ▼                                  │
┌─────────────────────────────────────────────────┐   │
│  COMPUTE A FRAUD-DETECTION SCORE FOR THE          │   │
│  SELECTED ENTITY                                  │   │
│                      306                          │   │
└─────────────────────┬─────────────────────────────┘   │
                      ▼                                  │
              ╱───────────────╲                          │
             ╱  MORE ENTITIES   ╲     YES                 │
             ╲  TO INVESTIGATE? ╱────────────────────────┘
              ╲      308       ╱
               ╲─────┬────────╱
                  NO │
                     ▼
┌─────────────────────────────────────────────────┐
│  DETERMINE A SET OF ENTITIES WHOSE FRAUD-         │
│  DETECTION SCORE INDICATES ANOMALOUS BEHAVIOR     │
│                      310                          │
└─────────────────────┬─────────────────────────────┘
                      ▼
                ┌─────────┐
                │   END   │
                └─────────┘
```

# FIG. 3

400

START

SELECT A FRAUD TYPE, *a*
402

COMPUTE A FRAUD WEIGHT, *fraud_weight(a)*, FOR FRAUD TYPE *a*
404

COMPUTE A WEIGHTED FRAUD COST, *wfc(a,p)*, WHICH INDICATES A COST DUE TO AN ENTITY *p* COMMUTTING FRAUDULENT TRANSACTIONS ASSOCIATED WITH FRAUD TYPE *a*, SUCH THAT THE COST IS WEIGHED BY *fraud_weight(a)*
406

MORE FRAUD TYPES TO CONSIDER?
408

YES

NO

COMPUTE A FRAUD-DETECTION SCORE FOR ENTITY *p* BY AGGREGATING THE WEIGHTED FRAUD COSTS
410

END

# FIG. 4

FIG. 5

APPARATUS <u>600</u>

COMMUNICATION MODULE
<u>602</u>

FRAUD-DETECTING
MODULE
<u>604</u>

FRAUD-WARNING
REPOSITORY
<u>606</u>

SCORE-COMPUTING
MODULE
<u>608</u>

FRAUDULENT-ENTITY-
DETECTING
MODULE
<u>610</u>

# FIG. 6

**FIG. 7**

Europäisches
Patentamt

European
Patent Office

Office européen
des brevets

## EUROPEAN SEARCH REPORT

Application Number

EP 14 15 5960

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * Statement in accordance with the Notice from the European Patent Office dated 1 October 2007 concerning business methods(OJ 11/2007; p592-593) The claimed subject matter, with due regard to the description and drawings, relates to processes comprised in the list of subject matter and activities for which no search is required under Rule 39 PCT. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. * ----- | 1-15 | INV. G06Q40/02 |
| | | | TECHNICAL FIELDS SEARCHED (IPC) |
| | | | G06Q |

The present search report has been drawn up for all claims

| Place of search | Date of completion of the search | Examiner |
|---|---|---|
| The Hague | 28 March 2014 | Nicoli, Félix |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)